# EUROPEAN PATENT SPECIFICATION

(11) **EP 0 495 600 B1**
(45) Date of publication and mention of the grant of the patent: **10.04.1996**
(21) Application number: 92300254.7
(22) Date of filing: 10.01.1992
(51) Int. Cl.: H04L 12/403, H04L 29/06, H04B 7/26

(54) **Polling method in a radio data packet communication system**
Abfrageverfahren in einem drahtlosen Paketdatenübermittlungssystem
Méthode de scrutin dans un système de communication de paquets de données par radio

(30) Priority: 14.01.1991 JP 14870/91
(43) Date of publication of application: 22.07.1992
(73) Proprietor: NEC CORPORATION, Tokyo (JP)
(72) Inventor: Kasugai, Teruaki, Minato-ku, Tokyo 108-01 (JP)
(74) Representative: Abnett, Richard Charles

(56) References cited:
- US-A- 4 466 001
- US-A- 4 742 512

## Description

### Background of the Invention

### Field of the Invention

The present invention relates to radio data communication and particularly to a radio data packet communication system in a mobile communication system comprising a base station, which is called a central station, and a plurality of mobile stations, which are each a terminal station.

### Description of the Related Art

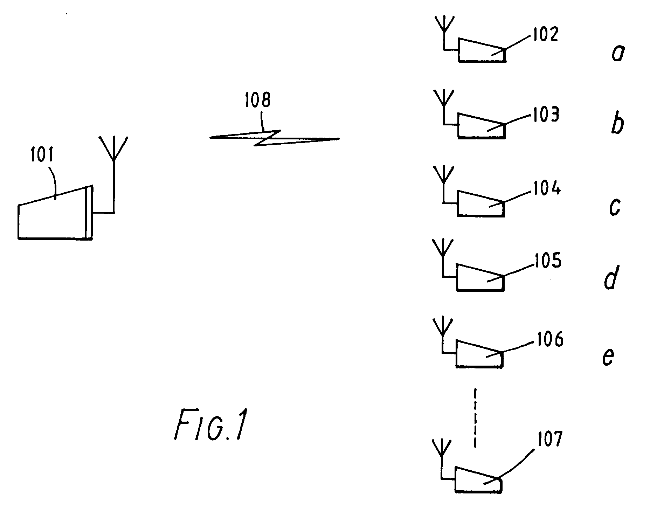

As shown in Fig. 1, in data communication in mobile communication systems, it is necessary that two-way communication be possible, such as transmission from a central station 101 toward terminal stations 102 through 107 (hereinafter referred to as downward communication) and transmission from the terminal stations 102 through 107 toward the central station 101 (hereinafter referred to as upward communication) and that contention between the transmissions by a plurality of stations be prevented. To this end, in conventional systems, the central station 101 sequentially inquires of each of the terminal stations 102 through 107 whether any information is to be sent in accordance with an inquiry sequence, and, if any one of the stations responds to the inquiry, the data transmission is permitted (that is, a polling system). A radio channel 108 is established between the stations which may be alternately used for upward communication or downward communication. In other words, this system enables half-duplex communication between the two stations. With this upward or downward communication, a single message may occasionally be transmitted as one unit, but usually, in order to utilize a small number of circuits common to a multiple number of stations, this message is finely divided into packets which are accommodated within a short time interval slot or frame to be multiplexed (time division multiplex system).

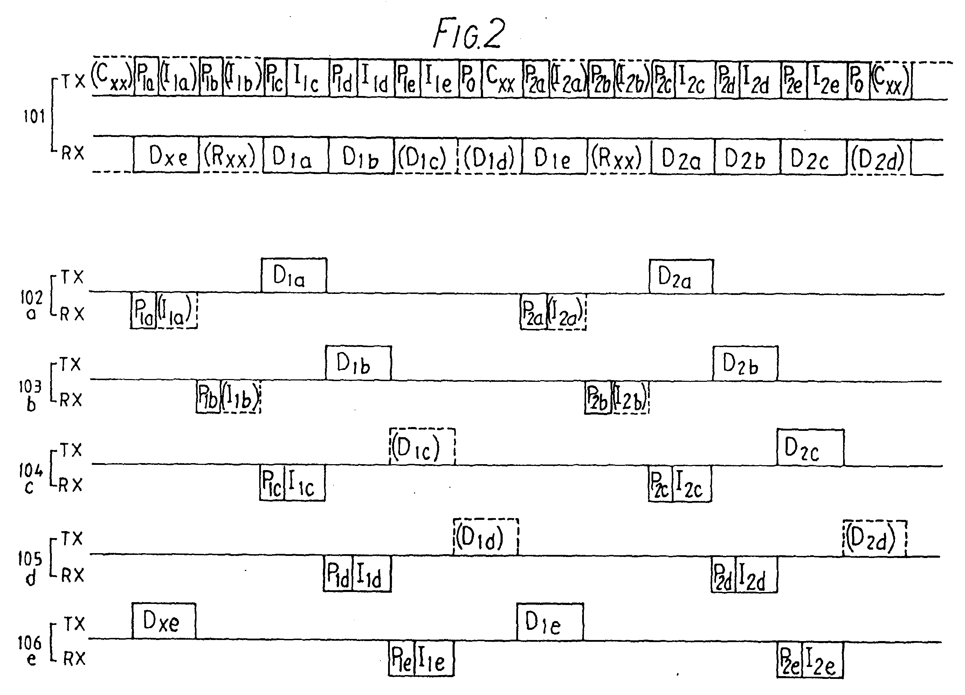

However, as shown in Fig. 2, according to a conventional polling system, the order in which the polling of the terminal stations 102 through 106 is carried out is previously fixed, although a downward data frame Tₓₓ transmitted to the terminal stations 102 through 106 is accommodated within the same time slot together with a polling frame Pₓₓ of the same terminal address. During polling, all of the terminal stations are uniformly polled in a fixed order regardless of whether there is data to be transmitted or not, and as a result, time slots D_{1c}, D_{1d} and D_{2d} or frames I₁ₐ, I₂ₐ, I_{1b} and I_{2b}, which are allocated to the terminal stations having no upward or downward data, are wasted. Even so, the interval of the time slot allocated to the upwardly or downwardly communicating terminals becomes longer, meaning that the utilization factor of the radio channel is limited to a low value.

United States patent US-A-4 466 001 describes a polling system for multiple terminal units which communicate with a base station by radio, and include some means of data entry such as a keyboard. The base station is capable of half-duplex mode and the terminal units operate in simplex mode. The system works cyclically in three phases. In the first phase of each polling cycle, the base station transmits a reference code to which all terminal units having data to transmit will respond. Each terminal unit has a preassigned short time slot in this first phase and transmits during that time slot if it has data to send. In the second phase, the base station transmits polls for data addressed in turn to each of the terminal units that has responded to the reference code by transmitting in its assigned time slot. The terminal units respond by transmitting their data. During the third phase, the base station transmits any data it has for the terminal units.

The present invention is defined in claim 1 below, to which reference should now be made. Advantageous features are set forth in the appendant claims.

A specific embodiment of the present invention is hereinafter described by way of example, with reference to the accompanying drawings.

Fig. 1 (described above) is a schematic diagram of a radio data packet communication system in a mobile communication system.

Fig. 2 (described above) is an example of a timing chart of the prior art.

Figs. 3 and 4 are respectively a block diagram of a central station and terminal stations constituting a system according to a specific embodiment of the present invention.

Fig. 5 illustrates the format of a polling frame, a command frame and upward and downward frames by way of example.

Fig. 6 is an example of a timing chart according to the present invention.

### Detailed Description of the Preferred Embodiments

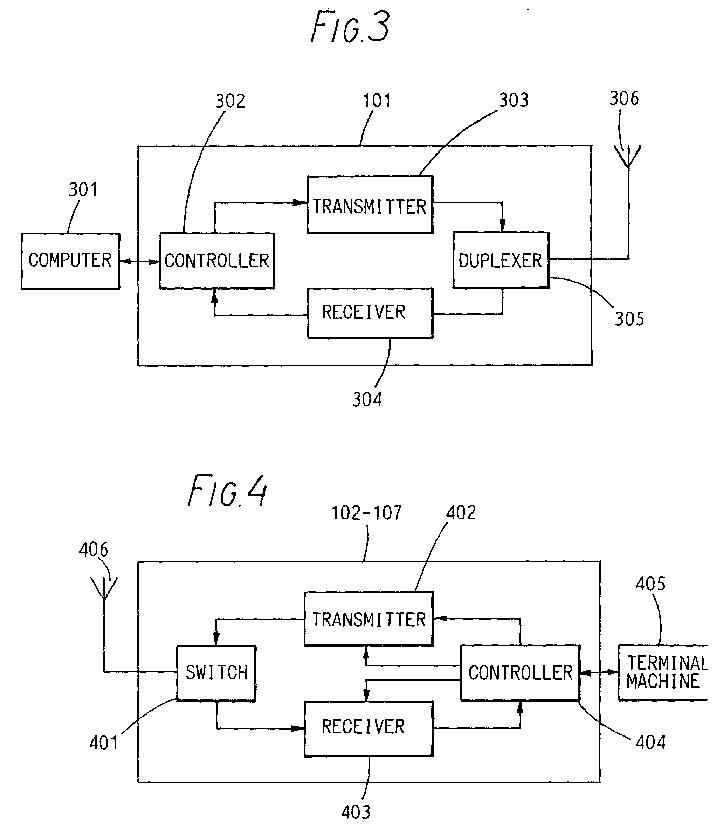

Referring to Fig. 3, a central station 101 is connected to a host computer 301 and comprises a controller 302 for carrying out communication control and protocol conversion, a transmitter 303 for modulating an entered signal to convert it into a radio wave, a receiver 304 for demodulating a received radio wave, an antenna 306, and a duplexer 305, which provides a full duplex mode function for constant transmission of a radio wave from the transmitter 303 to the antenna 306 while sending a radio wave from the antenna 306 to the receiver 304.

Referring to Fig. 4, each of the terminals 102 through 107 has a simplex function and is connected to a data terminal 405 and moreover comprises an antenna 406 similar to that for the central station, a transmitter 402, a receiver 403, a controller 404 and a transmitter/receiver switch 401 which normally lies in the receiving condition, for switching the radio wave from the transmitter 402 to the antenna 406 only when the upward data frame is transmitted according to polling from the central station 101.

Data from the host computer 301 is transmitted as radio waves to the terminal stations 102 through 107 via the transmitter 303, duplexer 305 and antenna 306 by being converted into packets for each address by the controller 302 of the central station 101. This radio wave is sent as the packet data to the control 404 via the antenna 406, transmitting/receiving switch 401 and the receiver 403 of the designated terminal stations 102 through 107 prior to being sent to the data terminal 405 converted to protocol or the like.

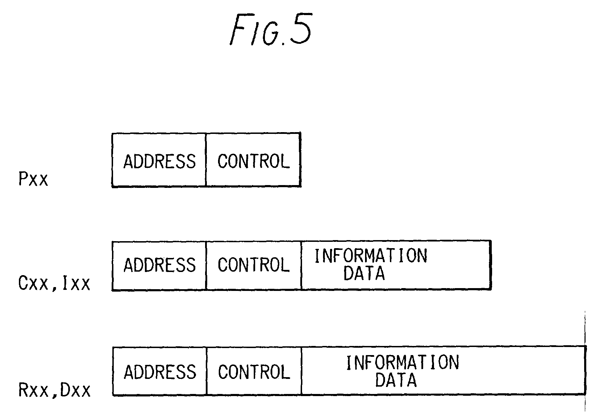

Fig. 5 illustrates an example of the format of each frame. A polling frame Pₓₓ comprises an address portion for discriminating the terminal station and a control portion for notifying flow control or the like. A command frame Cₓₓ and a downward data frame Iₓₓ also each comprise an address portion for discriminating the terminal station, a control portion for notifying the classification or termination of the command frame and downward data frame and an information data portion used in operation.

The first suffix (1 - 7) of all frames shows the sequential number of the frame transmitted or received to each terminal station, and the second suffix (a - e) distinguishes each of the terminal stations 102 - 107.

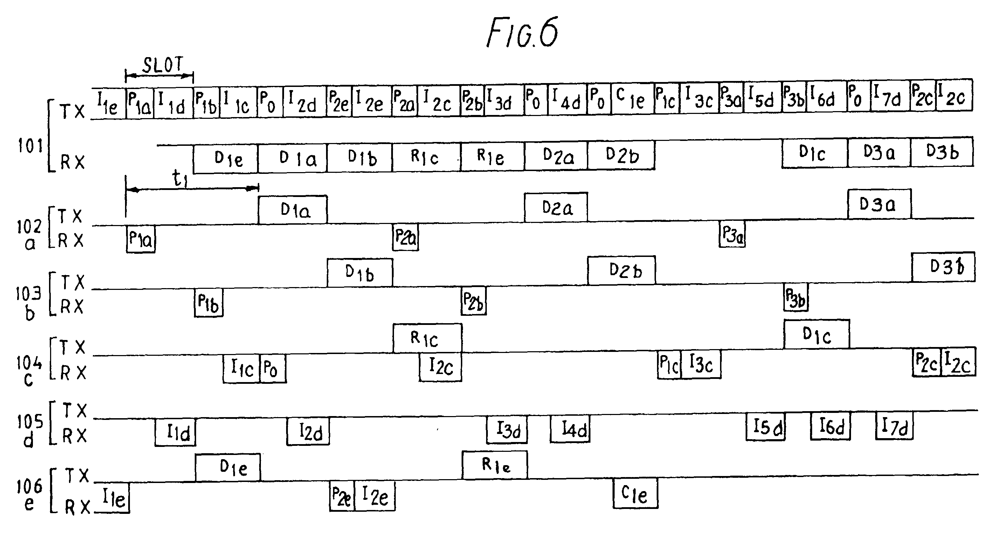

The operation of this embodiment is described with reference to the timing charge of Fig. 6. The central station defines a series of time slots of predetermined lengths, as shown in Fig. 6 where one time slot is marked SLOT. A polling frame Pₓₓ and a downward data frame Iₓₓ are alternately transmitted in a continuous manner in the time slots. The polling frames Pₓₓ for inviting the upward data frames Dₓₓ are each assigned specific addresses, so as to uniformly and sequentially poll each of the terminal stations 102 and 103 that are in the upward communication mode. In addition, a no-address polling frame Po for inviting the response frame Rₓₓ from unspecified terminal stations not in upward communication is transmitted at appropriate time intervals except when any terminal station is carrying out upward communication. If neither of the terminal stations is in the upward communication mode, all of the polling frames Pₓₓ are transmitted as Po.

In addition, the downward data frames Iₓₓ are each assigned their own address so that they may be uniformly transmitted to the terminal stations 104 and 105, which are in the downward communication mode. At this time, the transmission cycle for the same terminal station is determined according to the length of time required for the terminal station to be switched between the transmit/receive modes in accordance with the half duplex system. In this embodiment, it is set to a four-slot cycle. In addition, if the same terminal station 106 is simultaneously in the upward and downward communication modes, the polling frame Pₓₓ and the downward data frame Iₓₓ of the same addresses are continuously transmitted as a single slot.

The timing chart of Fig. 6 illustrates an example in which the terminal stations 102 through 106 are communicating with the central station 101 via the same radio channel.

The terminal stations 102 and 103 are each in the upward communication mode. The terminal station 102 receives and detects the polling frame P₁ₐ of the central station 101 and transmits the upward data frame D₁ₐ after a certain period of time t1 of about two slots. The central station 101, after transmitting the polling frames P_{1b} and P₂ₑ and the unspecified polling frame Po for the other terminal stations 103 and 106, transmits the polling frame P₂ₐ for the terminal station 102. The terminal station 102 correspondingly transmits the upward data frame D₂ₐ. The operation of the terminal station 103 is also similarly conducted.

The terminal stations 104 and 105 are each in the downward communication mode and, further, the terminal station 104 starts the upward communication mode during the downward communication mode. After receiving the downward data frame I_{1c}, the terminal station 104 detects the unspecified polling Po to transmit a response frame R_{1c} at a predetermined time to request a polling for its own station to the central station 101. This overlaps the downward data frame I_{2c} which is thus not received. The central station 101 which receives the response frame R_{1c} transmits a polling frame P_{1c} addressed to the terminal station 104 immediately before the next downward data frame I_{3c} is sent to that station. Upon receipt of the downward data frame I_{3c}, the terminal station 104 detects the absence of the serial numbers or the like of the control portion of the downward data frame I_{3c} and transmits an upward data frame D_{1c} which notifies that the downward data frame I_{2c} was not received. The central station 101 transmits again the downward data frame I_{2c} when it receives this data frame D_{1c}.

The terminal station 105 carries out only downward communication. The other terminal stations 106 and 104 in the downward communication mode are each put into the upward and downward two-way communication mode from the first or midway, respectively, as seen in Fig. 6, and the downward data frame I_{xc} and Iₓₑ from the central station 101 are transmitted in a four or more-slot cycle together with the polling frames P_{xc} and Pₓₑ. Therefore, the intermediate empty downward data frames are allowed to be allocated to the terminal station 105, so that the downward data frames I_{1d} through I_{7d} may be transmitted to the terminal station 105 in a short cycle.

The terminal station 106 relates to a case in which it terminates the upward and downward communications midway along Fig. 6. In synchronism with receiving the polling frame P₂ₑ, the terminal station 106 transmits a response frame R₁ₑ to notify termination of the upward communication. The termination of the downward communication from the central station 101 is notified to the terminal station 106 by a command frame C₁ₑ.

A response frame Rₓₓ and an upward data frame Dₓₓ each comprise: a similar address portion; a control portion for classifying the response frame or upward data frame, requesting the polling, and notifying the termination of the frame; and an information portion used in operation.

Although a preferred embodiment of the present invention has been shown and described in detail, it should be understood that various changes and modifications may be made without departing from the scope of the appended claims.

## Claims

1. A polling method of a radio data packet communication system, comprising a full duplex mode central station and a plurality of simplex mode terminal stations which communicate with each other on the same radio channel by sending messages divided into a series of packets via a series of time slots of predetermined length in a time division multiplex system, said central station sending successively a series of data in the time slots, said data comprising a polling frame P and one of either a downward data frame I or a command frame C in the time slot as a downward communication, each of said terminal stations polled by said polling frame transmitting one of either a response frame R or an upward data frame D after switching from a receive mode to a transmit mode as an upward communication, said polling method further including:
(a) providing an unspecified polling frame Po which is to be sent to all terminal stations except any terminal station in a transmitting mode so as to ask whether any station wants to send a request-polling response Rxx, and providing an individual polling frame Pxx which is to be sent to an individually specified terminal station so as to permit said terminal station to send an upward data frame,
(b) providing an individually specified address of a terminal station for each of individual polling frame Pxx and each downward data frame Ixx respectively,
(c) arranging polling frames Pxx and Po in successive time slots such as to send each polling frame Pxx in a predetermined periodic cycle, for so long as each terminal station is transmitting, and to send each unspecified polling frame Po in each time slot which is not assigned to an individual polling frame Pxx, and
(d) continuously sending each time slot which includes both the polling frame Pxx or Po and one downward data frame Ixx which is addressed to the same terminal station that is polled or any other terminal stations when there is no downward data to the station polled.

2. A polling method as claimed in claim 1, wherein said predetermined periodic cycle is a cycle of a longer period of time than is required for the terminal station to switch between transmit and receive modes.

3. A polling method as claimed in claim 1, wherein the radio channel between the central station and the terminal stations is provided by a single radio channel.

4. A polling method as claimed in claim 1, wherein the radio channel between the central station and the terminal stations is one channel provided by a multi-channel access system on a plurality of radio channels.

## Patentansprüche

1. Abfrageverfahren eines Paketdaten-Funkverbindungssystems, das eine Vollduplexbetrieb-Zentralstation und eine Mehrzahl von Simplexbetrieb - Endstationen aufweist, die untereinander auf dem gleichen Funkkanal kommunizieren, indem sie in eine Reihe von Paketen aufgeteilte Informationen in einer Reihe von Zeitschlitzen vorgegebener Länge in einem Zeitmultiplex-System senden, wobei die Zentralstation in den Zeitschlitzen aufeinanderfolgend eine Reihe von Daten sendet, die in dem Zeitschlitz als Abwärts-Übermittlung einen Abfrage-Datenblock P und entweder einen Abwärts-Datenblock I oder einen Befehlsblock C aufweisen, wobei jede der Endstationen, die von dem Abfrage-Datenblock abgefragt wurde, nach dem Umschalten von einem Empfangsmodus auf einen Sendemodus entweder einen Antwort-Datenblock R oder einen Aufwärts-Datenblock D als Aufwärts-Übermittlung überträgt, und wobei das Abfrageverfahren außerdem aufweist:
(a) Bereitstellen eines unspezifizierten Abfrage-Datenblocks P₀, der an alle Datenstationen außer an eine Datenstation, die sich in einem Übertragungsmodus befindet, gesendet werden soll, um zu fragen, ob irgendeine Station eine Anforderungs-Abfrageantwort Rₓₓ zu senden wünscht, und die Bereitstellung eines einzelnen Abfrage-Datenblocks Pₓₓ, der an eine individuell spezifizierte Datenstation gesendet werden soll, um der Datenstation zu erlauben, einen Aufwärts-Datenblock zu senden,
(b) Bereitstellen einer individuell spezifizierten Adresse einer Endstation für jeden einzelnen Abfrage-Datenblock Pₓₓ bzw. jeden Abwärts-Datenblock Iₓₓ,
(c) Anordnen von Abfrage-Datenblöcken Pₓₓ und P₀ in aufeinanderfolgenden Zeitschlitzen, um z. B. jeden Abfrage-Datenblock Pₓₓ in einem vorher festgelegten periodischen Zyklus zu senden, und zwar so lange, wie jede Endstation überträgt, und um jeden unspezifizierten Abfrage-Datenblock P₀ in jedem Zeitschlitz zu senden, der nicht einem individuellen Abfrage-Datenblock Pₓₓ zugeordnet ist, und
(d) ein kontinuierliches Senden jedes Zeitschlitzes, der sowohl den Abfrage-Datenblock Pₓₓ oder P₀ als auch einen Abwärts-Datenblock Iₓₓ enthält, der an dieselbe Datenstation adressiert ist, die abgefragt wird, oder irgendwelche andere Datenstationen, wenn es keine Abwärtsdaten für die abgefragte Station gibt.

2. Abfrageverfahren nach Anspruch 1, wobei der vorher festgelegte periodische Zyklus ein Zyklus mit einer längeren Zeitdauer als für die Endstation erforderlich ist, um zwischen einem Sende- und einem Empfangsmodus umzuschalten.

3. Abfrageverfahren nach Anspruch 1, wobei der Funkkanal zwischen der Zentralstation und den Endstationen von einem einzigen Funkkanal gebildet wird.

4. Abfrageverfahren nach Anspruch 1, wobei der Funkkanal zwischen der Zentralstation und den Endstationen ein Kanal ist, der durch ein Vielfach-Kanalzugriffssystem über eine Mehrzahl von Funkkanälen gebildet wird.

## Revendications

1. Procédé d'interrogation d'un système de communication de paquets de données par radio, comprenant une station centrale en mode duplex et une pluralité de stations terminales en mode alternat qui communiquent entre elles sur le même canal radio en émettant des messages divisés en une série de paquets via une série de tranches de temps de longueur prédéterminée dans un système multiplexeur à répartition dans le temps, ladite station centrale émettant successivement une série de données dans les tranches de temps, lesdites données comprenant une trame d'interrogation P et l'une, soit d'une séquence descendante de données I, soit une séquence de commandes C dans la tranche de temps en tant que communication descendante, chacune desdites stations terminales interrogées par ladite trame d'interrogation transmettant l'une, soit d'une trame de réponses R, soit d'une trame ascendante de données D, après avoir commuté d'un mode de réception à un mode d'émission en tant que communication ascendante, ledit procédé d'interrogation comprenant en outre :
(a) la délivrance d'une trame d'interrogation non spécifiée Po devant être émise à toutes les stations terminales, à l'exception de toute station terminale en mode d'émission, de manière à demander si une station quelconque désire émettre une réponse Rxx à une demande d'interrogation, et la délivrance d'une trame d'interrogation individuelle Pxx devant être émise vers une station terminale individuellement spécifiée de manière à permettre à ladite station terminale d'émettre une trame ascendante de données,
(b) la délivrance d'une adresse individuellement spécifiée d'une station terminale pour chaque trame d'interrogation individuelle Pxx et chaque trame descendante de données Ixx respectivement,
(c) la disposition des trames d'interrogation Pxx et Po dans des tranches de temps successives de manière à émettre chaque trame d'interrogation Pxx dans un cycle périodique prédéterminé, aussi longtemps que chaque station terminale émet, et pour émettre chaque trame d'interrogation non spécifiée Po dans chaque tranche de temps qui n'est pas assignée à une trame d'interrogation individuelle Pxx, et
(d) émettre continûment chaque tranche de temps qui comporte à la fois la trame d'interrogation Pxx ou Po et une trame descendante de données Ixx qui est adressée à la même station terminale qui est interrogée ou à toute autre station terminale lorsqu'il n'y a pas de données descendantes vers la station interrogée.

2. Procédé d'interrogation selon la revendication 1, dans lequel ledit cycle périodique prédéterminé est un cycle de période de temps plus longue que celle requise par la station terminale pour commuter entre les modes d'émission et de réception.

3. Procédé d'interrogation selon la revendication 1, dans lequel le canal radio entre la station centrale et les stations terminales est réalisé par un canal radio unique.

4. Procédé d'interrogation selon la revendication 1, dans lequel le canal radio entre la station centrale et les stations terminales est un canal réalisé par un système d'accès à canaux multiples sur une pluralité de canaux radio.
